# EUROPEAN PATENT APPLICATION

(11) **EP 4 144 548 A1**
(43) Date of publication of application: **08.03.2023**
(21) Application number: 21194919.3
(22) Date of filing: 03.09.2021
(51) Int. Cl.: B60H 1/00, B60H 1/32

(54) **HEATING AND/OR COOLING TREATMENT MODULE FOR VEHICLE**

(71) Applicant: Valeo Klimasysteme GmbH, 96476 Bad Rodach (DE)
(72) Inventor: FIENE, Andreas, 96476 Bad Rodach (DE); WEBER, Sebastian, 96476 Bad Rodach (DE)
(74) Representative: Valeo Systèmes Thermiques

(57) **Abstract**

The present invention is relative to a heating and/or cooling treatment module (1) for vehicle comprising at least a compressor device (6), a heat exchanger (2) adapted to exchange heat between a refrigerant fluid and a liquid and an accumulation device (10) adapted to store at least partially the refrigerant fluid, characterized in that the heating and/or cooling treatment module (1) comprises at least a first connection device (12) and a second connection device (14) fluidically connecting at least the compressor device (6), the heat exchanger (2) and/or the accumulation device (10), each connexion device (12, 14, 16, 18) comprising at least a canal adapted to guide the refrigerant fluid, said connexion devices (12, 14, 16, 18) being located on a same face of the heating and/or cooling treatment module (1).

## Description

The invention relates to a heating and/or cooling treatment module for vehicle, and more particularly to a heating and/or cooling treatment module for a thermal regulation of a battery of a vehicle or for recovering heat from a component of the vehicle power train.

Nowadays, thermal regulation devices make it possible to modify the temperature of an electric battery, either when the vehicle is started in cold weather, by increasing its temperature for example, or when driving or during a battery recharging operation, by reducing the temperature of the electric battery, which tends to heat up during its use.

Traditionally, thermal regulation devices comprise a refrigerant fluid which circulates through different components like heat exchangers, compressor device and expansion device to modify the pressure of the refrigerant fluid. For instance, the refrigerant fluid exchanges calories with another fluid when it circulates through a heat exchanger, its pressure increases when it circulates through a compressor device or its pressure decreases when it circulates through an expansion device. The modification of the pressure of the refrigerant fluid controls the temperature of said another fluid, for example air or water.

The refrigerant fluid participates at the thermal regulation of this another fluid which controls thermally the temperature of a battery system of the vehicle, for instance. In this function, the refrigerant fluid circulates in a dedicated circuit, which can be installed into a heating and/or cooling module.

However, thermal regulation devices occupy a lot of spaces in a vehicle, and constructors wish to reduce the spaces occupied by these systems. In fact, the reduction of the sizes of the components, like the heat exchangers, the compressor device and/or the expansion device, is not the only preoccupation, but the fluidic connections between each of these components and the location in relation to each others are also essential.

The present invention fits into this context by providing a compact heating and/or cooling treatment module in which the different components are fluidically and independently interconnected.

In this context, the present invention is covering a heating and/or cooling treatment module for vehicle comprising at least a compressor device, a heat exchanger adapted to exchange heat between a refrigerant fluid and a liquid and an accumulation device adapted to store at least partially the refrigerant fluid, characterized in that the heating and/or cooling treatment module comprises at least a first connection device and a second connection device fluidically connecting at least the compressor device, the heat exchanger and/or the accumulation device, each connexion device comprising at least a canal adapted to guide the refrigerant fluid, said connecting devices being located on a same face of the heating and/or cooling treatment module..

For instance, the heat exchanger is configured to exchange calories between the refrigerant fluid and the liquid which can be water or a dielectric fluid, for instance. For that, the heat exchanger comprises at least a first conduit through which the refrigerant fluid circulates, and a second conduit through which the liquid circulates, the calories exchange being realized between the first and the second conduit.

The compressor device is configured to increase the pressure of the refrigerant fluid. For instance, a pressure of refrigerant fluid circulating upstream the compressor device is less important than a pressure of refrigerant fluid circulating downstream the compressor device. Phase changes of refrigerant fluid along the thermodynamical loop thanks to the compressor device results in an increase of a temperature of the liquid.

The accumulation device is configured to store a part of the refrigerant fluid. More particularly, the accumulation device is configured to compensate and absorb the volume variations of the refrigerant fluid. Said accumulation device may be an accumulator or a receiver dryer.

The heating and/or cooling treatment module is configured to manage thermally the refrigerant fluid, noticeably with the compressor device which increases a pressure of the refrigerant fluid, increasing liquid temperature simultaneously. The refrigerant fluid circulating in the heat exchanger exchanges calories with the liquid, for instance handing over calories to the liquid to heat said liquid. In another configuration, the liquid hands over calories to the refrigerant fluid, the temperature of the refrigerant fluid increasing whereas the temperature of liquid decreases.

According to the invention, the location of each connexion device on the top of the heating and/or cooling treatment module optimizes, on the one hand, the assembly process of the heating and/or cooling treatment module, and on the other hand, the disassembly process of one of the connexion devices, if it is broken.

The canal of each connexion devices adapted to guide the refrigerant fluid is for example a first pipe and/or a second pipe, for the first connexion device, and/or a first canal and or a second canal, for the second connexion device.

Distinct connexion devices means that each connection device can be assembled or disassembled on/from the heating and/or cooling treatment module independently of others connexion devices.

As an option of the invention, the heating and/or cooling treatment module comprises an internal heat exchanger configured to exchange heat between a refrigerant fluid at high pressure and a refrigerant fluid at a lower pressure of a same refrigerant circuit, said first connection device fluidically connecting the internal heat exchanger at least to the heat exchanger, said second connection device fluidically connecting the heat exchanger to the accumulation device.

The internal exchanger is configured to exchange calories between the refrigerant fluid presenting a high pressure and the refrigerant fluid presenting a low pressure, the pressure of the refrigerant fluid being modified by the compressor device or an expansion device. Generally, the refrigerant fluid at high pressure hands over calories to the refrigerant fluid at low pressure.

The heating and/or cooling treatment module may comprise a third connexion device fluidically connecting the accumulation device to the internal heat exchanger, a fourth connexion device fluidically connecting the internal heat exchanger to the compressor device and a connecting system fluidically connecting at least the compressor device to the internal heat exchanger.

In that case, the canal of each connection devices adapted to guide the refrigerant fluid is for example any tube able to conduct the refrigerant fluid.

According to another optional characteristic of the invention, the heating and/or cooling treatment module comprises a box housing at least the compressor device, the internal heat exchanger when the module comprises such component, the heat exchanger, the accumulation device, the connexion devices and the connecting system, the box comprising a bottom wall and lateral walls extending between the bottom wall to a free end, free ends of the lateral walls participate to delimit an opening, the connection devices being located on the side of the box where the opening is.

According to another optional characteristic of the invention, the box comprises a cavity formed by the bottom wall, the compressor device being at least partially located in the cavity.

According to another optional characteristic of the invention, the heat exchanger adapted to exchange heat between a refrigerant fluid and a liquid is a first heat exchanger, the heating and/or cooling treatment module comprising a second heat exchanger adapted to exchange heat between a refrigerant fluid and a liquid. During the circulation of the refrigerant fluid through the first heat exchanger and the second heat exchanger, said refrigerant fluid exchanges calories with the liquid to increase or decrease the temperature of said liquid.

According to an optional characteristic, the module of the invention comprises a fluidic interface adapted to connect at least the connecting system and/or at least one of the connection devices to a heat treatment installation external to the heating and/or cooling treatment module.

According to another optional characteristic of the invention, the fluidic interface is located through one of the lateral walls of the box. Alternatively, the fluidic interface is located on the side of the box where the opening is. According to an option of the invention, the fluidic interface is designed to remain attached to the heating and/or cooling treatment module even if at least one of the connection devices is separated from the heating and/or cooling treatment module.

According to another optional characteristic of the invention, the first connection device comprises a first portion fluidically connecting the internal heat exchanger to the heat exchanger and a second portion fluidically connecting the first portion to the fluidic interface. In other words, the second portion comprises at least a pipe fluidically connecting on the one hand to the first portion and on the other hand to the fluidic interface.

According to another optional characteristic of the invention, the first portion is comprising at least a first check-valve. It is understood that the first check-valve is adapted to allow the circulation of the refrigerant fluid through the first portion to the first heat exchanger, along a single direction.

According to another optional characteristic of the invention, the second portion comprises at least a second check-valve. It is understood that the second check-valve is adapted to allow the circulation of the refrigerant fluid through the second portion to the first portion, along a single direction.

According to another optional characteristic of the invention, the first connection device comprises an intersection organ located at the interface of the first portion and the second portion, the first connection device comprising a first pipe extending at least between the intersection organ and the internal heat exchanger, a second pipe extending at least between the intersection organ and the first heat exchanger and a third pipe extending at least between the intersection organ and the fluidic interface.

According to another optional characteristic of the invention, the first connection device comprises an expansion device of the refrigerant fluid, the expansion device being located in the first portion of the first connection device.

According to another optional characteristic of the invention, the second connection device comprises a first canal extending between the heat exchanger and the accumulation device and at least a second canal extending between the first canal and the fluidic interface.

According to another optional characteristic of the invention, the connexion system comprises a fifth connexion device fluidically connecting the compressor device at least to the second heat exchanger and a sixth connexion device fluidically connecting the second heat exchanger to the internal heat exchanger.

According to another optional characteristic of the invention, the fifth connexion device comprises at least a shut-off valve, said shut-off valve being a first shut-off valve located on the first conduit and a second shut-off valve located on the second conduit.

According to another optional characteristic of the invention, the fifth connection device comprises a first conduit extending between the compressor device and the second heat exchanger and at least a second conduit extending between the first conduit and the fluidic interface.

Said first conduit and said second conduit are examples of the canal of a connection device adapted to guide the refrigerant fluid.

According to an alternative, the connexion system comprises a fifth connexion device fluidically connecting the compressor device to the fluidic interface and a sixth connexion device fluidically connecting the fluidic interface to the internal heat exchanger. In that case, the line(s) are examples of the canal of a connection device adapted to guide the refrigerant fluid.

According to another optional characteristic of the invention, the fifth connexion device comprises at least a shut-off valve and/or a check valve.

In the present document, a shut-off valve is a valve able to take only two positions: fully opened and fully closed.

According to another optional characteristic of the invention, the fifth connection device comprises a bifurcation organ between a main conduit, a first conduit and a second conduit, the main conduit extending between the compressor device and the bifurcation organ, the first conduit extending between the bifurcation organ and a first port of the fluidic interface and at least a second conduit extending between bifurcation organ and a second port of the fluidic interface.

According to another optional characteristic of the invention, the fifth connexion device comprises a check-valve located on the first conduit.

According to another optional characteristic of the invention, the fifth connexion device comprises a shut-off valve located on the second conduit.

Other characteristics, details and advantages of the invention will become clearer on reading the following description, on the one hand, and several examples of realisation given as an indication and without limitation with reference to the schematic drawings annexed, on the other hand, on which:
[Fig. 1] is a perspective representation of a heating and/or cooling treatment module;
[Fig. 2] is another perspective representation of the heating and/or cooling treatment module according to figure 1;
[Fig. 3] is a plane view of the heating and/or cooling treatment module according to figure 1;
[Fig. 4] is a schematic representation of a first refrigerant fluid circuit of the heating and/or cooling treatment module according to figure 1;
[Fig. 5] is a schematic representation of a second refrigerant fluid circuit of the heating and/or cooling treatment module according to figure 1.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

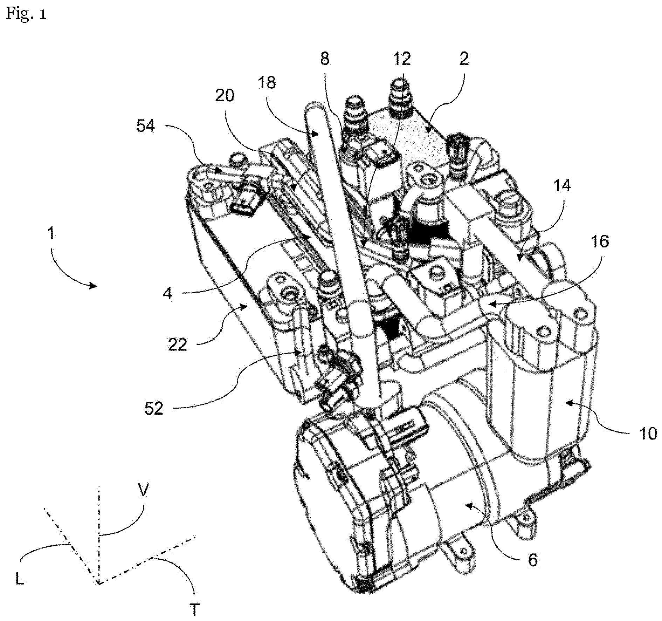

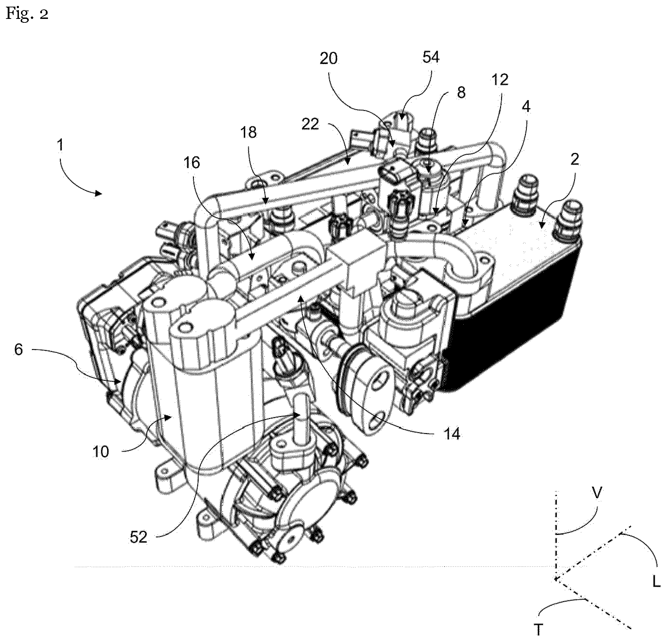

In the following description, the designations "longitudinal", "traversal" and "vertical" refer to the orientation of a heating and/or cooling treatment module according to the invention. A longitudinal direction corresponds to a main direction of extension of a heat exchanger, this longitudinal direction being parallel to a longitudinal axis L of a marker L, V, T shown in the figures 1 to 3. A transversal direction corresponds to a direction of main extension of a compressor device of the heating and/or cooling treatment module, for example, this transversal direction being parallel to a transverse axis T of a marker L, V, T, and perpendicular to the longitudinal axis L. Finally, a vertical direction corresponds to a vertical axis V of a marker L, V, T, the vertical axis V being perpendicular to the longitudinal axis L and the transversal axis T.

A heating and/or cooling treatment module 1 according to the invention is illustrated in figures 1 to 3, the heating and/or cooling treatment module 1 being configured to be installed in an electric or hybrid vehicle. The heating and/or cooling treatment module 1 comprises a refrigerant fluid which circulates through the heating and/or cooling treatment module 1 to thermally regulate at least another fluid. For instance, the last one circulates through a loop to increase or decrease a temperature of an electric battery of the vehicle.

The heating and/or cooling treatment module 1 comprises at least a heat exchanger 2 adapted to exchange heat between the refrigerant fluid and a liquid and a compressor device 6.

The compressor device 6 is configured to compress the refrigerant fluid. By "compress" it is understood that the pressure of the refrigerant fluid is increased through the compressor device 6.

The compression of the refrigerant fluid circulating through the compressor device 6 causes the refrigerant fluid to change its phase, passing from a vapor phase to a liquid phase when cooled by another fluid, for example a liquid or air.

Preferentially, the heating and/or cooling treatment module 1 comprises also an expansion device 8. The expansion device 8 is configured to undergo a reduction of pressure of the refrigerant fluid circulating through the said expansion device 8. In other words, a pressure of the refrigerant fluid measured upstream the expansion device 8 is higher than a pressure of the refrigerant fluid measured downstream of the expansion device 8.

The expansion of the refrigerant fluid circulating through the expansion device 8 causes the refrigerant fluid to change its phase, passing from a liquid phase to a vapor phase when heated by another fluid, for example a liquid or air.

It is thus possible to define a high-pressure portion through which circulates the refrigerant fluid from the compressor device 6 to the expansion device 8 and a low-pressure portion through which circulates the refrigerant fluid from the expansion device 8 to the compressor device 6, a pressure of the refrigerant fluid measuring in the high-pressure portion being higher than a pressure of the refrigerant fluid measured in the low-pressure portion.

In an embodiment, the heating and/or cooling treatment module 1 may comprise also an internal heat exchanger 4 configured to exchange heat between the refrigerant fluid circulating through the high-pressure portion and the refrigerant fluid circulating through the low-pressure portion. In this configuration, the refrigerant fluid circulating through the high-pressure portion ceding calories to the refrigerant fluid circulation through the low-pressure portion.

Furthermore, the heat exchanger 2 and the internal heat exchanger 4 extend each mainly along a longitudinal direction L of the heating and/or cooling treatment module 1, the compressor device 6 extending mainly along a transversal direction T of the heating and/or cooling treatment module 1 which is perpendicular to the longitudinal direction L. This disposition of the heat exchanger 2, the internal heat exchanger 4 and the compressor device 6 optimize the occupied volume of the heating and/or cooling treatment module 1 in the vehicle, which is a compact heating and/or cooling treatment module 1.

As shown in figure 1 to 3, the heating and/or cooling treatment module 1 comprises also an accumulation device 10 in which is stored a part of the refrigerant fluid. The accumulation device 10 is configured to accumulate a part of the refrigerant fluid circulating through the heating and/or cooling treatment module 1 in order to absorb a volume variation of the refrigerant fluid, depending on the thermal conditions of use.

According to the invention, each component of the heating and/or cooling treatment module 1 is fluidically connecting at least to another component of the heating and/or cooling treatment module 1. It is understood that the components of the heating and/or cooling treatment module 1 participate to delimit a circuit through which the refrigerant fluid circulates.

In view of that objective, the heating and/or cooling treatment module 1 comprises at least a first connection device 12, for example fluidically connecting the internal heat exchanger 4 at least to the heat exchanger 2, a second connection device 14, for example fluidically connecting the heat exchanger 2 to the accumulation device 10.

At least two connection devices 12, 14, 16, 18 are located on a same face of the heating and/or cooling treatment module 1. As an option, all the first, second, third, fourth and a connecting system 20 are located on the same face of the heating and/or cooling treatment module 1, fluidically connecting at least one of the components of the heating and/or cooling treatment module 1 to another component while extending on the same face of the said heating and/or cooling treatment module 1.

The effect of such a specific location is that it allows to easily configure the heating and/or cooling treatment module 1 depending on the required use of the heating and/or cooling treatment module 1. In fact, an operator can change simultaneously two or more connecting devices 12, 14, 16, 18, without having to access another side of the heating and/or cooling treatment module 1. It allows also to inspect and repair easily the connexion devices 12 to 18 and connecting system 20.

In a specific embodiment, the heating and/or cooling treatment module 1 may comprise a third connexion device 16 fluidically connecting the accumulation device 10 to the internal heat exchanger 4, a fourth connexion device 18 fluidically connecting the internal heat exchanger 4 to the compressor device 6, each connexion device comprising at least a canal adapted to guide the refrigerant fluid.

The heating and/or cooling treatment module 1 may also comprise a connecting system 20 fluidically connecting at least the compressor device 6 to the internal heat exchanger 4,

It is understood that the heating and/or cooling treatment module 1 extends globally in the shape of a rectangular parallelepiped, each connexion devices 12, 14, 18, 20 being located on the same face of this shape. This clever disposition of the connexion devices 12, 14, 16, 18 optimizes the assembly and/or the disassembly of the heating and/or cooling treatment module 1.

Moreover, the connecting devices 12, 14, 16, 18 are distinct to each other. Each connecting device 12, 14, 16, 18 can be assembled or disassembled on/from the heating and/or cooling treatment module 1 independently of others connexion devices 12, 14, 16, 18. Moreover, the connecting devices 12, 14, 16, 18 are also distinct to the connecting system 20.

Preferentially, the heating and/or cooling treatment module 1 comprises a box housing at least the compressor device 6, the internal heat exchanger 4, the heat exchanger 2, the accumulation device 10, the connexion devices 12, 14, 16, 18 and the connecting system 20, the box comprising a bottom wall and lateral walls extending between the bottom wall to a free end, free ends of the lateral walls participate to delimit an opening, the connection devices being in front of the opening. The connexion devices 12, 14, 16, 18 are, in this disposition, easily accessible by an operator for assembly or disassembly.

The box comprises a cavity formed or delimited by the bottom wall, at least the compressor device 6 being partially located in the cavity. The cavity takes globally a form of a cylindrical recess in which the compressor device 6 is located.

As shown in figures 1 to 4, the heating and/or cooling treatment module 1 comprises a first heat exchanger 2 adapted to exchange heat between the refrigerant fluid and a first liquid and a second heat exchanger 22 adapted to exchange heat between a refrigerant fluid and a second liquid, the first liquid and the second liquid being the same liquid or two different liquids. For that, each heat exchanger 2, 22 comprises two passes, a first pass through which the refrigerant fluid flows and a second pass through which the liquid flows.

The first heat exchanger 2 is installed on the low-pressure portion while the second heat exchanger 22 is located on the high-pressure portion. It is understood that the refrigerant fluid circulates through the first heat exchanger 2 cools the first liquid, by capturing calories, while the refrigerant fluid that circulates through the second heat exchanger 22 heat the second liquid, by giving up calories.

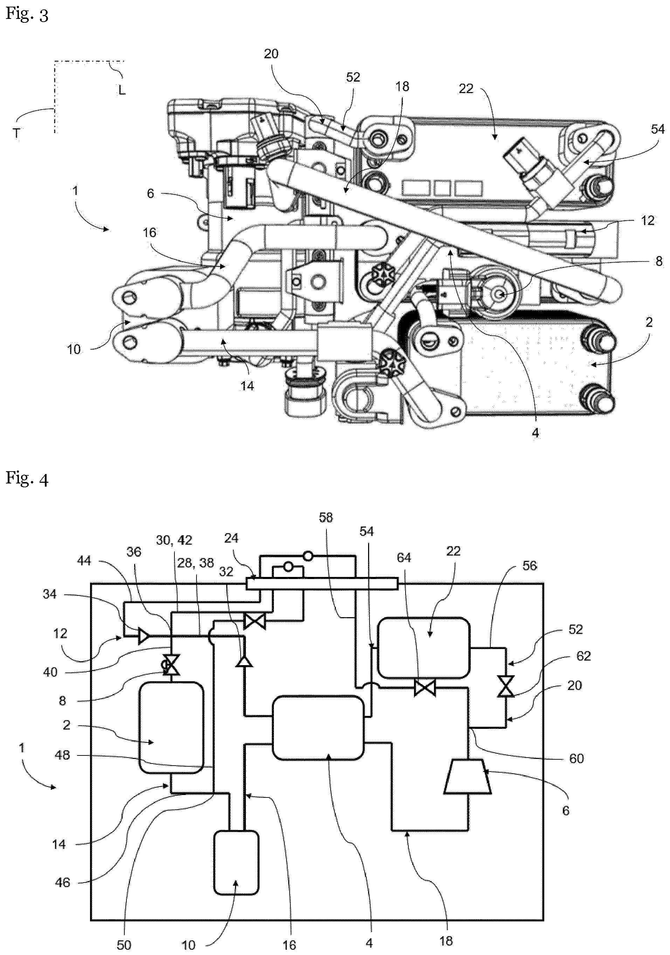

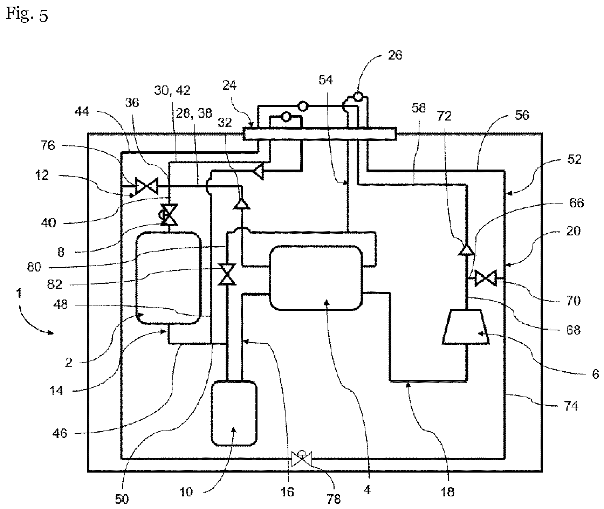

The heating and/or cooling treatment module 1 comprises a fluidic interface 24 adapted to connect at least the connecting system 20 and or two or more connection devices 12, 14, 16, 18 to a heat treatment installation 26 external to the heating and/or cooling treatment module 1 and represented in figures 4 and 5. The fluidic interface 24 is located through one of the lateral walls of the box. In this disposition, it is easier to fluidically connect the fluidic interface 24 to the heat treatment installation 26. Separation of a connection device from the module does not impose separation of the fluidic interface from the module, namely from the box. Said fluidic interface 24 can remain in place while an operator change a connection device 12, 14, 16, 18 or a connecting system 20.

Each of the connection devices 12, 14, 16, 18 will now be described and starting with the description of the first connection device 12 with reference to figures 1 to 5.

The first connection device 12 comprises a first portion 28 fluidically connecting the internal heat exchanger 4 to the first heat exchanger 2 and a second portion 30 fluidically connecting the first portion 28 to the fluidic interface 24. In other words, the second portion 30 comprises at least a pipe fluidically connecting on the one hand to the first portion 28 and on the other hand to the fluidic interface 24.

More particularly, the first portion 28 is comprising at least a first check-valve 32, the second portion 30 comprising a second check-valve 34. It is understood the first check-valve 32 is adapted to allow the circulation of the refrigerant fluid through the first portion 28 to the first heat exchanger 2 while the second check-valve 34 is adapted to allow the circulation of the refrigerant fluid through the second portion 30 from the fluidic interface 24 to the first portion 28.

As shown in figures 4 and 5, the first connection device 12 comprises an intersection organ 36 located at the interface of the first portion 28 and the second portion 30, the first connection device 12 comprising a first pipe 38 extending at least between the intersection organ 36 and the internal heat exchanger 4, a second pipe 40 extending at least between the intersection organ 36 to the first heat exchanger 2 and a third pipe 42 extending at least between the intersection organ 36 to the fluidic interface 24. The refrigerant fluid circulating through the first connection device 12 circulates from the internal heat exchanger 4 either to the first portion 28 through the first pipe 38, the intersection organ 36 and the second pipe 40, or to the second portion 30 through the first pipe 38, the intersection organ 36 and the third pipe 42.

The first connection device 12 also comprises a fourth pipe 44 extending between the intersection organ 36 and the fluidic interface 24, such that the refrigerant fluid circulating from the fluidic interface 24 to the first heat exchanger 2.

Furthermore, the expansion device 8 of the refrigerant fluid mentioned above is located on the first portion 28 of the first connection device 12. More particularly, the expansion device 8 is located on the second pipe 40 between the intersection organ 36 and the first heat exchanger 2. In this disposition, a pressure of the refrigerant fluid circulating through the second pipe 40 decreases, causing a cooling of the liquid.

The second pipe 40 of the first connection device 12 is fluidically connecting to the first pass of the first heat exchanger 2, the cooling refrigerant fluid circulates through this pass to the second connection device 14.

For its part, the second connection device 14 comprises a first canal 46 extending between the first heat exchanger 2 and the accumulation device 10 and at least a second canal 48 extending between the first canal 46 and the fluidic interface 24. More particularly, the first canal 46 extends between the first pass of the first heat exchanger 2 to the accumulation device 10.

In other words, the second connection device 14 presents a bifurcation 50 between the first canal 46 and the second canal 48.

The third connexion device 16 extends between the accumulation device 10 and the internal heat exchanger 4. The fourth connexion device 18 extends between the internal heat exchanger 4 and the compressor device 6.

As shown in figures 1 to 4, the connecting system 20 comprises a fifth connection device 52 fluidically connecting the compressor device 6 at least to the second heat exchanger 22, a sixth connection device 54 fluidically connecting the second heat exchanger 22 to the internal heat exchanger 4.

The fifth connection device 52 comprises a first conduit 56 extending between the compressor device 6 and the second heat exchanger 22 and at least a second conduit 58 extending between the first conduit 56 and the fluidic interface 24. In other words, the fifth connection device 52 presents an intersection point 60 between the first conduit 56 and the second conduit 58, the refrigerant fluid circulating from the compressor device 6 circulates to the intersection point 60, and then, either to the second heat exchanger 22 through the first conduit 56, or to the fluidic interface 24 through the second conduit 58.

The fifth connection device 52 comprises at least a shut-off valve. Advantageously, the fifth connection device 52 comprises a first shut-off valve 62 located on the first conduit 56 between the intersection point 60 and the second heat exchanger 22 and a second shut-off valve 64 located on the second conduit 58.

In another embodiment of the invention represented figure 5, the connecting system 20 comprises a fifth connection device 52 fluidically connecting the compressor device 6 to the fluidic interface 24 and a sixth connection device 54 fluidically connecting the fluidic interface 24 to the internal heat exchanger 4. More particularly, the fifth connection device 52 comprises a bifurcation organ 66 between a main conduit 68, a first conduit 56 and a second conduit 58, the main conduit 68 extending between the compressor device 6 and the bifurcation organ 66, the first conduit 56 extending between the bifurcation organ 66 and a first port of the fluidic interface 24 and at least a second conduit 58 extending between bifurcation organ 66 and a second port of the fluidic interface 24. In this configuration, the refrigerant fluid circulating from the compressor device 6 circulates through the fifth connection device 52 either to the first port of the fluidic interface 24 through the main conduit 68, the bifurcation organ 66 and the first conduit 56, or to the second port of the fluidic interface 24 through the main conduit 68, the bifurcation organ 66 and the second conduit 58.

The fifth connection device 52 comprises at least a check-valve 70 located on the second conduit 58 and a shut-off valve 72 located on the first conduit 56. The check-valve 70 allow the circulation of the refrigerant fluid through the second conduit 58 from the compressor device 6 to the fluidic interface 24.

Furthermore, and as shown in figure 5, the heating and/or cooling treatment module 1 comprises a line 74 extending between the first conduit 56 of the fifth connection device 52 and the second portion 30 of the first connection device 12. More particularly, the line 74 is fluidically connecting on the one hand to the first conduit 56 of the fifth connection device 52 between the check-valve 70 and the fluidic interface 24, and on the other hand to the second portion 30 of the first connection device 12 between the intersection organ 36 and the fluidic interface 24. The refrigerant fluid circulates through the line 74 from the first conduit 56 of the fifth connection device 52 to the second portion 30 of the first connection device 12.

The heating and/or cooling treatment module 1 comprises an expansion organ 78 installed on the line 74. Like the expansion device 8, the expansion organ 78 decreases the pressure of the refrigerant fluid, causing a decrease of a temperature of the liquid.

Moreover, the heating and/or cooling treatment module 1 comprises an alternative line 80 extending from the second connection device 14 to the sixth connection device 54. More particularly, the alternative line 80 is fluidically connecting to the first canal 46 of the second connection device 14. The refrigerant fluid circulating through the first canal 46 of the second connection device 14 can circulate through the alternative line 80 to the sixth connection device 54.

Furthermore, a shut-off valve 82 is installed on the alternative line 80, to allow or block the circulation of the refrigerant fluid through the alternative line 80.

As shown in figure 4, the refrigerant fluid circulates on the one hand through the high-pressure portion and on the other hand through the low-pressure portion in a closed loop. It is possible to define a main loop and auxiliary loops connecting to the main loop.

More particularly, in the main loop, the refrigerant fluid circulates in the high-pressure portion from the compressor device 6 to the expansion device 8 through the fifth connection device 52, the second heat exchanger 22, the sixth connection device 54, the internal heat exchanger 4 and the first portion 28 of the first connection device 12. For that, the refrigerant fluid circulates through the first conduit 56 of the fifth connection device 52 to the first pass of the second heat exchanger 22. As it circulates through the first pass of the second heat exchanger 22, the refrigerant fluid exchanges calories with the second liquid circulating through the second pass of the second heat exchanger 22, for instance handing over calories to the liquid to heat said liquid.

Then, the refrigerant fluid circulates through the sixth connection device 54 from the first pass of the second heat exchanger 22 to the internal heat exchanger 4. As it circulates through the internal heat exchanger 4, the refrigerant fluid exchanges calories with the refrigerant fluid circulates through the low-pressure portion to heat the refrigerant fluid circulates through the low-pressure portion.

The refrigerant fluid circulates then from the internal heat exchanger 4 to the expansion device 8 through the first portion 28 of the first connection device 12, and more particularly through the first pipe 38, the intersection organ 36 and the second pipe 40.

The refrigerant fluid circulates in the low-pressure portion from the expansion device 8 to the compressor device 6 through the first heat exchanger 2, the accumulation device 10, the internal heat exchanger 4 and the fourth connexion device 18. For that, the refrigerant fluid circulates from the expansion device 8 to the first heat exchanger 2 through the second pipe 40, and more particularly to the first pass of the first heat exchanger 2. As it circulates through the first pass of the first heat exchanger 2, the refrigerant fluid exchanges calories with the first liquid circulating through the second pass of the first heat exchanger 2, for instance transfer calories to the first liquid to cool said first liquid.

Then, the refrigerant fluid circulates through the second connection device 14 from the first pass of the first heat exchanger 2 to the accumulation device 10. More particularly, the refrigerant fluid circulates for that through the first canal 46 of the second connection device 14. In the accumulation device 10, a part of the refrigerant fluid may be stored.

The refrigerant fluid circulates from the accumulation device 10 to the internal heat exchanger 4 through the third connexion device 16. As it circulates through the internal heat exchanger 4, the refrigerant fluid exchanges calories with the refrigerant fluid circulating in the high-pressure portion to cool the refrigerant fluid circulates through the high-pressure portion.

The refrigerant fluid circulates then from the internal heat exchanger 4 to the compressor device 6 through the fourth connexion device 18.

In this embodiment, the refrigerant fluid circulates also through two auxiliary loops.

In a first auxiliary loop, the refrigerant fluid circulates through the second conduit 58 of the fifth connection device 52 from the compressor device 6 to the fluidic interface 24, and then to the fluidic interface 24 to the intersection organ 36 through the fourth pipe 44. More particularly, the fluidic interface 24 is fluidically connecting to a thermal treatment system comprising at least another heat exchanger called inner condenser, constitutive of a heating, ventilation and/or air conditioning system of the vehicle for instance. The refrigerant fluid circulates through this inner condenser to exchange calories with a fluid, for example air or a liquid. The refrigerant fluid circulates then through the fourth pipe 44 to the intersection organ 36, and after to the expansion device 8.

In a second auxiliary loop, the refrigerant fluid circulates through the second portion 30 of the first connection device 12 from the intersection organ 36 to the fluidic interface 24, and then to the fluidic interface 24 to the second connection device 14. More particularly, the refrigerant fluid circulates through the third pipe 42 of the second portion 30 from the intersection organ 36. As mentioned above, the fluidic interface 24 is fluidically connecting to the thermal treatment system comprising at least another heat exchanger, called evaporator, constitutive of the heating, ventilation and/or air conditioning system of the vehicle for instance. Moreover, the thermal treatment system comprises the expansion device 8 through which the refrigerant fluid is expanded. The refrigerant fluid circulates through this evaporator to exchange calories with a fluid, and advantageously to capture calories from the fluid and cool the said fluid. The refrigerant fluid circulates then through the second canal 48 to the bifurcation 50, and after to the accumulation device 10.

As shown figure 5, the refrigerant fluid circulates on the one hand through the high-pressure portion and on the other hand through the low-pressure portion in a closed loop. It is possible to define a main loop and auxiliary loops.

More particularly, in the main loop, the refrigerant fluid circulates in the high-pressure portion from the compressor device 6 to the expansion device 8 through the fifth connection device 52, the fluidic interface 24, the heat treatment installation 26, the sixth connection device 54, the internal heat exchanger 4 and the first portion 28 of the first connection device 12. For that, the refrigerant fluid circulates through the first conduit 56 of the fifth connection device 52 to the fluidic interface 24, and more particularly to the heat treatment installation 26. As it circulates through the heat treatment installation 26, the refrigerant fluid exchanges calories with a fluid also circulating through the heat treatment installation 26, for instance handing over calories to the fluid to heat said fluid.

Then, the refrigerant fluid circulates through the sixth connection device 54 from the fluidic interface 24 to the internal heat exchanger 4. As it circulates through the internal heat exchanger 4, the refrigerant fluid exchanges calories with the refrigerant fluid that circulates through the low-pressure portion to cool the refrigerant fluid that circulates through the high-pressure portion.

The refrigerant fluid circulates then from the internal heat exchanger 4 to the expansion device 8, through the first portion 28 of the first connection device 12.

As an alternative circulation, the refrigerant fluid circulates from the fifth connection device 52 to fourth pipe 44 of the first connection device 12 through the line 74. As it circulates through the line 74, the refrigerant fluid circulates through the expansion organ 78, which decreases the pressure of the refrigerant fluid. The refrigerant fluid circulating from the line 74 is mixed with the refrigerant fluid circulating from the internal heat exchanger 4, the mixed refrigerant fluid circulating then to the expansion device 8.

The refrigerant fluid circulates in the low-pressure portion from the expansion device 8 to the compressor device 6 through the first heat exchanger 2, the second connection device 14, the accumulation device 10, the third connection device 16, the internal heat exchanger 4 and the fourth connexion device 18.

For that, the refrigerant fluid circulates from the expansion device 8 to the first heat exchanger 2 through the second pipe 40, and more particularly to the first pass of the first heat exchanger 2. As it circulates through the first pass of the first heat exchanger 2, the refrigerant fluid exchanges calories with the first liquid circulating through the second pass of the first heat exchanger 2, for instance transferring calories to the first liquid to cool said first liquid.

Then, the refrigerant fluid circulates through the second connection device 14 from the first pass of the first heat exchanger 2 to the accumulation device 10. More particularly, the refrigerant fluid circulates for that through the first canal 46 of the second connection device 14. In the accumulation device 10, a part of the refrigerant fluid may be stored.

The refrigerant fluid circulates from the accumulation device 10 to the internal heat exchanger 4 through the third connexion device 16. As it circulates through the internal heat exchanger 4, the refrigerant fluid exchanges calories with the refrigerant fluid circulating in the high-pressure portion to heat the refrigerant fluid circulates through the low-pressure portion.

The refrigerant fluid circulates then from the internal heat exchanger 4 to the compressor device 6 through the fourth connexion device 18.

In this embodiment, the refrigerant fluid circulates also through three auxiliary loops.

In a first auxiliary loop, the refrigerant fluid circulates through the second conduit 58 of the fifth connection device 52 from the compressor device 6 to the fluidic interface 24, and then to the fluidic interface 24 to the intersection organ 36 through the fourth pipe 44. More particularly, the fluidic interface 24 is fluidically connecting to a thermal treatment system comprising at least another heat exchanger, called inner condenser, constitutive of a heating, ventilation and/or air conditioning system of the vehicle for instance. The refrigerant fluid circulates through this inner condenser to exchange calories with a fluid, for example air or a liquid. The refrigerant fluid circulates then through the fourth pipe 44 to the intersection point 60, and after to the expansion device 8.

In a second auxiliary loop, the refrigerant fluid circulates through the second portion 30 of the first connecting device 12 from the intersection organ 36 to the fluidic interface 24, and then to the fluidic interface 24 to the second connection device 14. More particularly, the refrigerant fluid circulates through the third pipe 42 of the second portion 30 from the intersection organ 36. As mentioned above, the fluidic interface 24 is fluidically connecting to the thermal treatment system comprising at least another heat exchanger, called evaporator, constitutive of the heating, ventilation and/or air conditioning system of the vehicle for instance. The refrigerant fluid circulates through this evaporator to exchange calories with a fluid, and advantageously to capture calories from the fluid and cool the said fluid. The refrigerant fluid circulates then through the second canal 48 to the bifurcation 50, and after to the accumulation device 10.

In a third auxiliary loop, the refrigerant fluid circulates from the second connection device 14 to the sixth connection device 54 through the alternative line 80. It is understood that the refrigerant fluid circulating through the first canal 46 of the second connection device 14 can circulate to the accumulation device 10 and/or to the sixth connection device 54 through the alternative line 80.

The invention shall not, however, be limited to the means and configurations described and illustrated herein, and shall also extend to any equivalent means or configuration described and illustrated herein, and to any technical combination operating such means. In particular, many temperature sensors and/or pressure sensors may be used on the different connexion devices, to measure and control the temperature and the pressure of the refrigerant fluid circulating through the heating and/or cooling treatment module 1.

## Claims

1. A heating and/or cooling treatment module (1) for vehicle comprising at least a compressor device (6), a heat exchanger (2) adapted to exchange heat between a refrigerant fluid and a liquid and an accumulation device (10) adapted to store at least partially the refrigerant fluid, **characterized in that** the heating and/or cooling treatment module (1) comprises at least a first connection device (12) and a second connection device (14) fluidically connecting at least the compressor device (6), the heat exchanger (2) and/or the accumulation device (10), each connexion device (12, 14, 16, 18) comprising at least a canal adapted to guide the refrigerant fluid, said connexion devices (12, 14, 16, 18) being located on a same face of the heating and/or cooling treatment module (1).

2. The heating and/or cooling treatment module (1) according to the preceding claim, **characterized in that** it comprises an internal heat exchanger (4) configured to exchange heat between refrigerant fluid at high pressure and refrigerant fluid at a lower pressure of a same refrigerant circuit, said first connection device (12) fluidically connecting the internal heat exchanger (4) at least to the heat exchanger (2), said second connection device (14) fluidically connecting the heat exchanger (2) to the accumulation device (10).

3. The heating and/or cooling treatment module (1) according to the preceding claim, comprises a third connexion device (16) fluidically connecting the accumulation device (10) to the internal heat exchanger (4), a fourth connexion device (18) fluidically connecting the internal heat exchanger (4) to the compressor device (6) and a connecting system (20) fluidically connecting at least the compressor device (6) to the internal heat exchanger (4).

4. The heating and/or cooling treatment module (1) according to any of claim 2 or 3, **characterized in that** the heat exchanger (2) adapted to exchange heat between a refrigerant fluid and a liquid is a first heat exchanger (2), the heating and/or cooling treatment module (1) comprising a second heat exchanger (22) adapted to exchange heat between a refrigerant fluid and a liquid.

5. The heating and/or cooling treatment module (1) according to any of the preceding claims, **characterized in that** it comprises a fluidic interface (24) adapted to connect at least the connecting system (20) and/or at least one of the connection devices (12, 14, 16, 18) to a heat treatment installation (26) external to the heating and/or cooling treatment module (1).

6. The heating and/or cooling treatment module (1) according to the preceding claim, **characterized in that** the fluidic interface (24) is designed to remain attached to the heating and/or cooling treatment module (1) even if at least one of the connection devices (12, 14, 16, 18) is separated from the heating and/or cooling treatment module (1).

7. The heating and/or cooling treatment module (1) according to any of claims 2 to 4 combined with claim 5 or 6, **characterized in that** the first connection device (12) comprises a first portion (28) fluidically connecting the internal heat exchanger (4) to the heat exchanger (2) and a second portion (30) fluidically connecting the first portion (28) to the fluidic interface (24).

8. The heating and/or cooling treatment module (1) according to the preceding claim, **characterized in that** the first connection device (12) comprises an intersection organ (36) located at the interface of the first portion (28) and the second portion (30), the first connection device (12) comprising a first pipe (38) extending at least between the intersection organ (36) and the internal heat exchanger (4), a second pipe (40) extending at least between the intersection organ (36) to the first heat exchanger (2) and a third pipe (42) extending at least between the intersection organ (36) to the fluidic interface (24).

9. The heating and/or cooling treatment module (1) according to one of the claims 7 to 8, **characterized in that** the first connection device (12) comprises an expansion device (8) of the refrigerant fluid, the expansion device (8) being located on the first portion (28) of the first connection device (12).

10. The heating and/or cooling treatment module (1) according to any of claims 1 to 4 combined with any of the claims 5 to 9, **characterized in that** the second connection device (14) comprises a first canal (46) extending between the heat exchanger (2) and the accumulation device (10) and at least a second canal (48) extending between the first canal (46) and the fluidic interface (24).

11. The heating and/or cooling treatment module (1) according to claim 3 and 4, **characterized in that** the connecting system (20) comprises a fifth connection device (52) fluidically connecting the compressor device (6) at least to the second heat exchanger (22) and a sixth connection device (54) that fluidically connects the second heat exchanger (22) to the internal heat exchanger (4).

12. The heating and/or cooling treatment module (1) according to the preceding claim combined with any of the claims 5 to 9, **characterized in that** the fifth connection device (52) comprises a first conduit (56) extending between the compressor device (6) and the second heat exchanger (22) and at least a second conduit (58) extending between the first conduit (56) and the fluidic interface (24).

13. The heating and/or cooling treatment module (1) according to claims 2 and any of claims 5 to 10, **characterized in that** the connecting system (20) comprises a fifth connection device (52) fluidically connecting the compressor device (6) to the fluidic interface (24) and a sixth connection device (54) fluidically connecting the fluidic interface (24) to the internal heat exchanger (4).

14. The heating and/or cooling treatment module (1) according to the preceding claim, **characterized in that** the fifth connection device (52) comprises a bifurcation organ (66) between a main conduit (68), a first conduit (56) and a second conduit (58), the main conduit (68) extending between the compressor device (6) and the bifurcation organ (66), the first conduit (56) extending between the bifurcation organ (66) and a first port of the fluidic interface (24) and at least a second conduit (58) extending between bifurcation organ (66) and a second port of the fluidic interface (24).
